# EUROPÄISCHE PATENTSCHRIFT

(11) **EP 4 098 091 B1**
(45) Veröffentlichungstag und Bekanntmachung des Hinweises auf die Patenterteilung: **29.10.2025**
(21) Anmeldenummer: 22000134.1
(22) Anmeldetag: 16.05.2022
(51) Int. Cl.: A01B 39/22, A01B 35/22, A01B 39/02, A01B 63/24

(54) **KULTIVATOR MIT ZENTRALER SPANNVORRICHTUNG**
CULTIVATOR WITH CENTRAL TENSIONER
CULTIVATEUR POURVU DE DISPOSITIF DE SERRAGE CENTRALE

(30) Priorität: 19.05.2021 AT 982021
(43) Veröffentlichungstag der Anmeldung: 07.12.2022
(73) Patentinhaber: Dick, Bernhard, 4753 Taiskirchen (AT)
(72) Erfinder: Dick, Bernhard, 4753 Taiskirchen (AT)
(74) Vertreter: Jell, Friedrich

(56) Entgegenhaltungen:
- EP-A1- 3 155 885
- WO-A1-2020/251462
- DE-A1- 102010 023 329
- DE-A1- 102016 106 353

## Beschreibung

Die Erfindung betrifft einen Kultivator, dessen Rahmen zumindest einen Längsträger und mindestens ein quer dazu angeordnetes Tragrohr besitzt, an dem eine Anzahl von Werkzeugen zur Bodenbearbeitung in beliebiger Position anbringbar ist.

Kultivatoren dienen der mechanischen Unkrautbekämpfung, die durch die Einschränkungen beim Einsatz von Herbiziden an Bedeutung gewinnt. Die Werkzeuge bearbeiten den Acker beispielsweise zwischen Reihenkulturen. Dabei können sehr verschiedene Werkzeuge eingesetzt werden. Die Reihenkulturen weisen die verschiedensten Reihenweiten auf, weil die Pflanzenabstände von Pflanzenart und Region abhängig sind. Die Abstände müssen somit jeweils neu eingestellt werden. Das ist vor allem bei kleinen Pflanzabständen zeitraubend.

Aus der EP 31 55 885 A1 ist eine Vorrichtung mit Werkzeugen bekannt, die auf ihrem Tragrohr verschiebbar und so in beliebiger Position festsetzbar sind. Dazu müssen die Werkzeuge einzeln gelöst, auf dem Tragrohr verschoben und wieder festgeschraubt werden. Auf einem Tragrohr können bis zu 30 und mehr Werkzeuge angebracht sein. Die Umstellung jedes einzelnen Werkzeuges ist mühselig und zeitraubend, besonders bei großer Anzahl.

Die DE 10 2016 106 353 A1 beschreibt einen Kultivator, dessen Tragrohr ein erstes V-Profil aufweist, an dem die Kopfteile der einzelnen Werkzeuge eingehängt und jeweils mittels eines eigenen Spannelementes befestigt sind.

Der Erfindung liegt die Aufgabe zugrunde, einen Kultivator so auszubilden, dass die auf dem Tragrohr sitzenden Werkzeuge mit einem gemeinsamen Mechanismus fixiert bzw. gelockert werden können. Erfindungsgemäß wird das gemäß dem Kennzeichnungsteil des 1. Anspruchs erreicht.

Das Zusammenwirken der gemeinsamen sich über die ganze Länge des Tragrohres erstreckenden V-Profile mit den einzelnen V-Nuten der einzelnen Kopfteile der Werkzeuge sorgt für genaue und für alle Werkzeuge gleiche Positionierung in ihrer längsgerichteten Vertikalebene. Unter V-Profilen und V-Nuten sind Profile bzw Nuten mit zumindest teilweise konvergenten Flächen zu verstehen. Das um eine in Längsrichtung des Tragrohres angeordnete Achse schwenkbare zweite V-Profil dient der gleichzeitigen Freigabe oder Festlegung aller Werkzeuge. Dazu sind zweiarmige Hebel an einem Ende mit dem V-Profil fest verbunden, am anderen Ende greift ein Aktuator an. So können die Werkzeuge entsprechend der jeweiligen Reihenweite positioniert und in der Folge vom Aktuator festgesetzt werden. Die Längserstreckung des beweglichen zweiten V-Profiles erlaubt es, mit nur wenigen Aktuatoren auszukommen.

Um einen festen Sitz aller Werkzeuge zu erreichen, weisen die V-Nuten der einzelnen Werkzeuge jeweils ein elastisches Element auf, das unabhängig von Toleranzen einen für alle Werkzeuge ungefähr gleichen Anpressdruck der V-Profile sicherstellt.

Die V-Profile und V-Nuten können in zwei Ausführungsformen verwirklicht sein: Zum Festklemmen der Werkzeuge können entweder die Kanten der V-Profile auswärts reichen und in nach innen offene V-Nuten der Kopfteile eingreifen. Oder die Kanten der V-Profile reichen einwärts und greifen in nach außen offene V-Nuten der Kopfteile ein. Im ersten Fall wird das zweite V-Profil vom Aktuator auswärts bewegt, in zweiten Fall einwärts.

Auch für die Ausbildung der elastischen Elemente gibt es verschiedene vorteilhafte Lösungen. Die Wahl zwischen diesen wird von den klimatischen Bedingungen und von der Art der Werkzeuge bestimmt.

Das Festklemmen der einzelnen Werkzeuge mittels sich über die ganze Länge, oder einen Teil dieser, erstreckender V-Profile bietet große Freiheit in der Anordnung der Aktuatoren. Im einfachsten Fall genügt ein einziger. Meist sind zwei oder drei für ein Tragrohr ausreichend. Dann sind alle Aktuatoren gemeinsam ansteuerbar, vorzugsweise von der Traktorkabine aus. In einem Kultivator sind in der Regel mehrere Tragrohre mit jeweils einer Reihe von Werkzeugen in Fahrtrichtung hintereinander angeordnet. Auch dann sind alle Aktuatoren gemeinsam ansteuerbar.

Bei Kultivatoren mit großer Arbeitsbreite müssen für den Straßentransport Teile auf- oder umgeklappt werden. Das ist in der erfindungsgemäßen Konstruktion leicht lösbar: Tragrohr und V-Profile sind geteilt und über Scharniere miteinander verbunden. So können die äußeren Teile der Tragrohre und der V-Profile ihre eigenen Aktuatoren haben. Das Aufklappen ist dann ohne weitere Eingriffe möglich.

Im Folgenden wird die Erfindung anhand von Zeichnungen verschiedener Ausführungsbeispiele beschrieben und erläutert. Es stellen dar:
- Fig. 1:: Eine erste Ausführungsform in Klemmstellung,
- Fig. 2:: Dieselbe in offener Stellung,
- Fig. 3:: Eine zweite Ausführungsform in Klemmstellung,
- Fig. 4:: Detail A in Fig. 1 in einer ersten Variante,
- Fig. 5:: Detail A in Fig. 1 in einer zweiten Variante,
- Fig. 6:: Eine gesamt - Draufsicht auf Fig. 1.

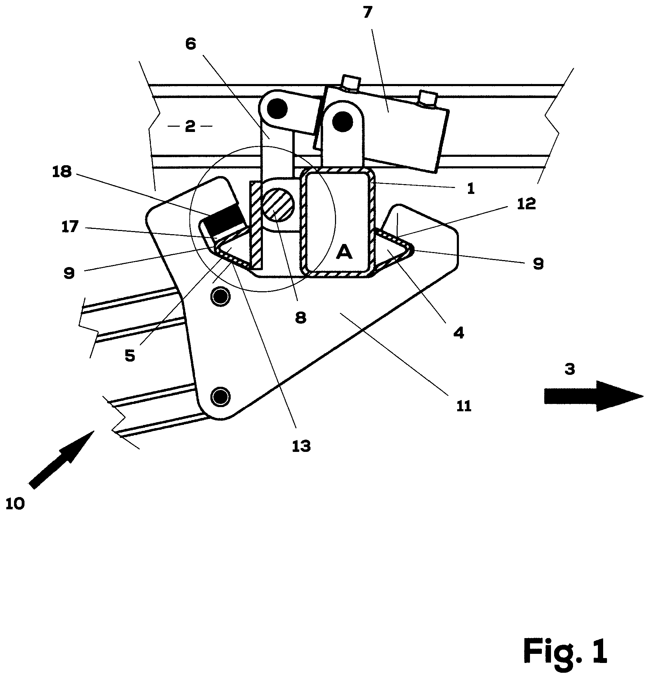

In **Fig. 1** ist von dem Rahmen eines Kultivators nur ein Tragrohr 1 im Schnitt gezeigt und ein Längsträger 2 angedeutet. Meist sind mehrere Tragrohre 1 in Fahrtrichtung 3 hintereinander angeordnet. Die in der Fig. 1 linke Seite des Tragrohres ist somit hinten und die rechte in Fahrtrichtung vorne, oder umgekehrt. Das Tragrohr 1 ist hier im Querschnitt ein Rechteck, an dessen in Fahrtrichtung vorderer Seite ein erstes V-Profil 4 mit einer Kante 9 vorgesehen ist. Es (4) erstreckt sich über die ganze Länge des Tragrohres 1. An der hinteren Seite des Tragrohres 1 ist ein zweites ebenso langes zweites V-Profil 5 schwenkbar angeordnet. Dazu ist es stellenweise über Hebel 6 mit einem Aktuator 7 verbunden. Der Hebel 6 ist um eine am Tragrohr 1 befestigte Achse 8 schwenkbar. Der Hebel ist hier zweiarmig. Die Kanten 9 der V-Profile 4,5 sind in der Ausführungsform der Fig. 1 einander abgewandt.

Unter einem V-Profil ist ein Profil zu verstehen, das zwei konvergente Flächen, oder zumindest zwei konvergente Flächenabschnitte, aufweist. Es könnte also ein Trapezquerschnitt, oder sogar ein Kreisquerschnitt sein. Im Fall des ersten V-Profils könnte es sogar mit dem beliebigen Querschnitt des Tragrohres vereint sein.

Ein Werkzeug 10 zur Bodenbearbeitung ist mit seinem Kopfteil 11 am Tragrohr 1 verschiebbar und arretierbar. Dazu hat es eine erste und eine zweite V-Nut 12, 13, in welche die V-Profile 4,5 passen. Für die V-Nuten gilt die Definition der V-Profile analog. Die hintere V-Nut 12 hat an ihrer oberen Wand einen Gummiblock 18 als elastisches Element und darüber ein Plättchen 17 aus Metall. Der Gummiblock 18 gleicht Toleranzen und Unebenheiten der Kopfteile aus, sodass alle Werkzeuge mit ungefähr derselben Kraft eingespannt sind.

Das Plättchen 17 dient der Schonung des Gummiblocks 18. Wenn der Gummiblock auch in Schubrichtung verformbar ist, können die einzelnen Werkzeuge leichter einzeln aus- und eingehängt werden.

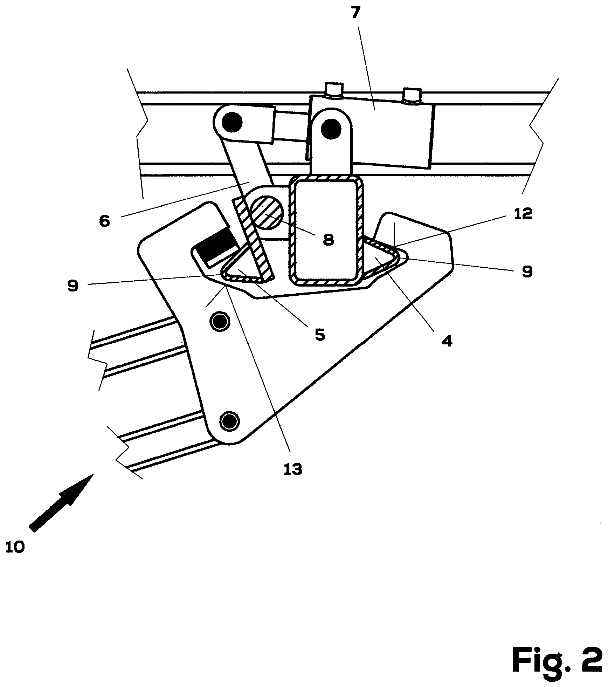

**Fig. 2** zeigt die Ausführungsform der Fig. 1 in offener Stellung, in der die Werkzeuge am Tragrohr 1 verschiebbar oder bei weiterer Öffnung sogar abnehmbar sind. Der Aktuator 7 kann elektrisch, hydraulisch oder mechanisch sein. In Extremis könnte er auch manuell betätigt sein.

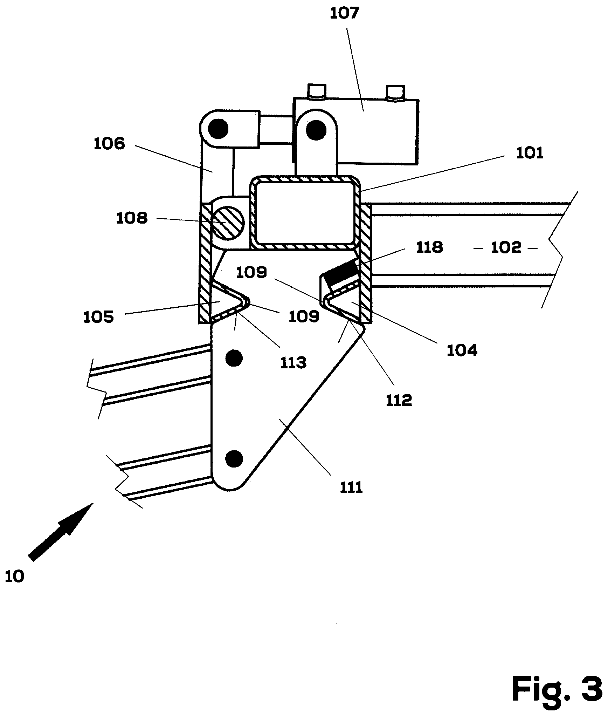

In der Variante der **Fig. 3** werden dieselben Bezugszeichen, erhöht um 100, verwendet. Die Kanten 109 der V-Profile 104,105 reichen einwärts und greifen in nach außen offene V-Nuten 112,113 der Kopfteile 111 ein. Zum Festklemmen der Werkzeuge 10 wird hier das zweite V-Profil 105 vom Aktuator 107 einwärts beaufschlagt. Dazu ist es über einen um eine Achse 108 schwenkbaren Hebel 106 mit dem Aktuator 107 verbunden. Das erste V-Profil 104 ist unter dem Tragrohr 101 angeordnet und mit diesem fest verbunden.

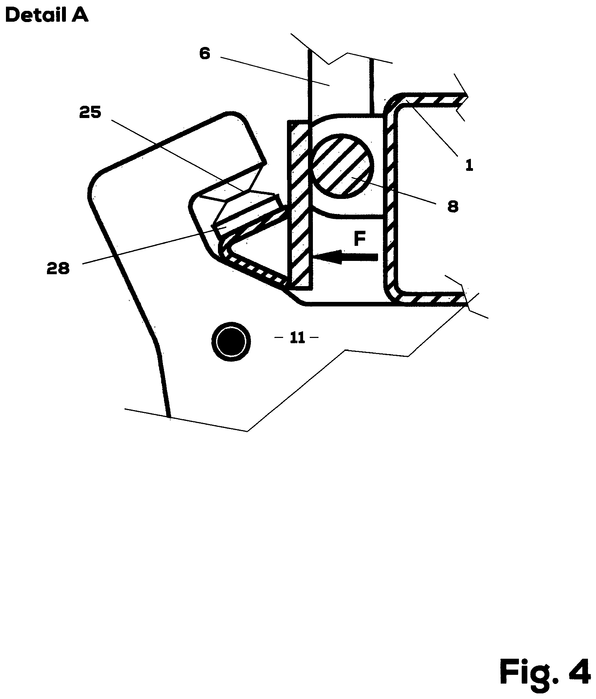

**Fig. 4** zeigt als erstes variiertes Detail die Ausführung des elastischen Elements als Feder, als Blattfeder oder Tellerfedern 25.

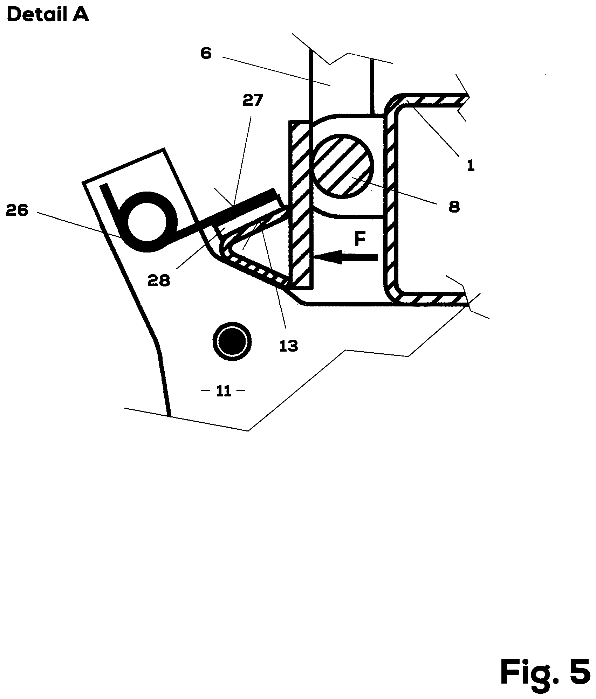

**Fig. 5** zeigt als zweites variiertes Detail die Ausführung des elastischen Elements als Spiralfeder oder Schenkelfeder 26 bzw Haarnadelfeder. Sie ist am Kopfteil 11 befestigt. Ein Schenkel 27 der Schenkelfeder 26 bildet die obere Begrenzung der V-Nut 13 und trägt das Plättchen 28. An diesem greift das zweite V-Profil 5 an.

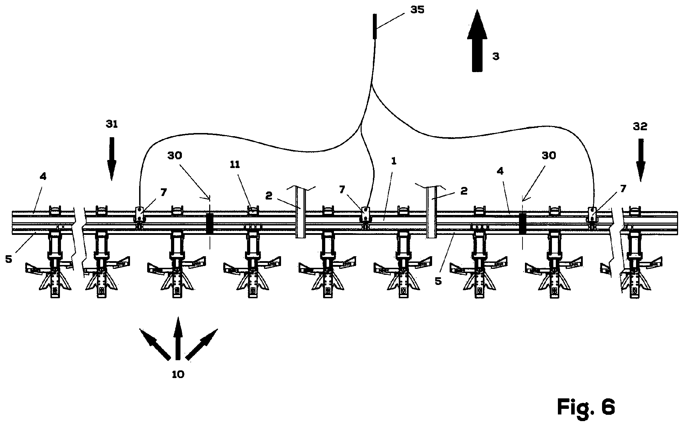

**Fig. 6** zeigt das Tragrohr 1 mit den beiden V-Profilen 12,13 und angedeutet die beiden Längsträger 2, von oben gesehen. Tragrohr 1 und V-Profile 12,13 sind für den Straßentransport zerschnitten und deren äußere Teile 31,32 sind an Scharnieren 30 hochklappbar. Auf dem Tragrohr 1 ist eine Reihe von Werkzeugen 10 angeordnet.

In diesem Fall sind drei Aktuatoren 7 vorgesehen, je einer für einen Teil des zerschnittenen V-Profils. Deren Energie- oder Druckölzufuhr ist in einem zentralen Anschluss 35 zusammengefasst, der mit einem Zugfahrzeug verbunden ist. So können komfortabel aus der Traktorkabine alle Werkzeuge 10 fixiert, gelockert oder vollständig abgeworfen werden. Das gilt auch für den Regelfall, dass mehrere Tragrohre mit Werkzeugen hintereinander angeordnet sind.

Von den beschriebenen Ausführungsformen kann im Rahmen der Ansprüche abgewichen werden. So kann der Aktuator bzw können die Aktuatoren beliebig gestaltet sein und die Profile können bei entsprechender Gestaltung der Kopfteile trapez- oder kreisförmig sein, solange nur Paare konvergenter Flächenteile vorhanden sind. Ein kreisförmiges Profil könnte auf dem Hebel 6 und/oder sogar um die Achse 8 drehbar sein. Weiters können die beiden Seiten des Tragrohres sowohl links und rechts (oder vorne und hinten) als auch rechts und links (oder hinten und vorne) sein.

Insgesamt ist so ein Kultivator geschaffen, an dem die verschiedensten Werkzeuge in beliebig einstellbaren Positionen festgeklemmt werden können, wobei das Lösen und Schließen der Klemmung bequem von der Kabine des Zugfahrzeuges aus gesteuert werden kann.

## Patentansprüche

1. Kultivator, dessen Rahmen mindestens einen Längsträger (2) und mindestens ein quer dazu angeordnetes Tragrohr (1) besitzt, an dem eine Anzahl von Werkzeugen (10) zur Bodenbearbeitung in beliebiger Position anbringbar ist, wobei
a. das Tragrohr (1; 101) über seine ganze Länge oder eines Teils dieser an einer Seite ein mit ihm fest verbundenes erstes Profil (4; 104) mit zumindest teilweise konvergenten Flächen, insbesondere V-Profil, aufweist, und an seiner anderen Seite ein zweites Profil (5; 105) mit zumindest teilweise konvergenten Flächen, insbesondere V-Profil, um eine in Längsrichtung des Tragrohres (1; 101) angeordnete Achse (8; 108) schwenkbar angebracht ist, wobei der Kultivator zumindest einen Aktuator (7) aufweist, der auf einen Hebel (6; 106) wirkt, der um die Achse (8; 108) schwenkbar und mit einem Ende mit dem zweiten Profil (5; 105) fest verbunden ist, und wobei
b. die Werkzeuge (10) des Kultivators einen Kopfteil (11; 111) haben, der an beiden Seiten Nuten (12,13; 112,113) mit zumindest teilweise konvergenten Flächen, insbesondere V-Nuten, aufweist, nämlich eine erste (12, 112) und eine zweite Nut (13, 113), in die die Profile (4,5; 104,105) eingreifen, und wobei die mit dem zweiten beweglichen Profil (5; 105) zusammenwirkende zweite Nut (13; 113) ein elastisches Element (18; 25; 26) aufweist, über das eine Klemmkraft wirkt.

2. Kultivator nach Anspruch 1, **dadurch gekennzeichnet, dass** die Profile (4,5) mit ihrer Eingriffskante (9) auswärts weisen und die Nuten (12,13) des Kopfteiles (11) nach innen zum Tragrohr (1) hin offen sind, wobei das bewegliche zweite Profil (5) zum Festklemmern des Werkzeuges (10) von dem mindestens einen Aktuator (7) nach außen hin beaufschlagt ist.

3. Kultivator nach Anspruch 1, **dadurch gekennzeichnet, dass** die Profile (104, 105) mit ihren Eingriffskanten (109) einwärts weisen und die Nuten (112, 113) des Kopfteiles (111) nach außen hin offen sind, wobei das bewegliche zweite Profil (105) zum Festklemmern des Werkzeuges (10) von dem mindestens einen Aktuator (7) nach innen zu beaufschlagt ist.

4. Kultivator nach Anspruch 1, **dadurch gekennzeichnet, dass** das elastische Element ein Gummiblock (18) ist.

5. Kultivator nach Anspruch 1, **dadurch gekennzeichnet, dass** das elastische Element eine metallische Federspange oder Tellerfeder (25) ist.

6. Kultivator nach Anspruch 1, **dadurch gekennzeichnet, dass** das elastische Element eine Schenkelfeder (26) ist, deren erster Schenkel mit dem Kopfteil (11) fest verbunden ist und dessen zweiter Schenkel (27) mit dem nach außen weisenden beweglichen zweiten Profil (5) zusammenwirkt.

7. Kultivator, dessen Rahmen mindestens einen Längsträger (102) und mindestens ein quer dazu angeordnetes Tragrohr (101) besitzt, an dem eine Anzahl von Werkzeugen (10) zur Bodenbearbeitung in beliebiger Position anbringbar ist, wobei
a. das Tragrohr (101) über seine ganze Länge oder eines Teils dieser an einer Seite ein mit ihm fest verbundenes erstes Profil (104) mit zumindest teilweise konvergenten Flächen, insbesondere V-Profil, aufweist, das unter dem Tragrohr (101) angeordnet ist, und an seiner anderen Seite ein zweites Profil (105) mit zumindest teilweise konvergenten Flächen, insbesondere V-Profil, um eine in Längsrichtung des Tragrohres (101) angeordnete Achse (108) schwenkbar angebracht ist, wobei der Kultivator zumindest einen Aktuator (107) aufweist, der auf einen Hebel (106) wirkt, der um die Achse (108) schwenkbar und mit einem Ende mit dem zweiten Profil (105) fest verbunden ist, und wobei
b. die Werkzeuge (10) des Kultivators einen Kopfteil (111) haben, der an beiden Seiten Nuten (112, 113) mit zumindest teilweise konvergenten Flächen, insbesondere V-Nuten, aufweist, nämlich eine erste (112) und eine zweite Nut (113), in die die Profile (104, 105) eingreifen, wobei die Profile (104, 105) mit ihren Eingriffskanten (109) einwärts weisen, die Nuten (112, 113) des Kopfteiles (111) nach außen hin offen sind und das bewegliche zweite Profil (105) zum Festklemmern des Werkzeuges (10) von dem mindestens einen Aktuator (7) nach innen zu beaufschlagt ist, wobei von der ersten Nut (112) und zweiten Nut (113) ausschließlich die erste Nut (112) ein elastisches Element (118) aufweist, über das eine Klemmkraft wirkt.

8. Kultivator nach Anspruch 1 oder 7, **dadurch gekennzeichnet, dass** der Kultivator eine Anzahl von Aktuatoren (7) aufweist, insbesondere zwei oder drei Aktuatoren (7) für ein Tragrohr (1; 101), welche Aktuatoren (7) gemeinsam ansteuerbar sind.

9. Kultivator nach Anspruch 8, **dadurch gekennzeichnet, dass** die Tragrohre (1) und die Profile (4,5) geteilt sind und deren äußere Teile (31) auf- oder umklappbar sind, wobei jeder Teil (31) des beweglichen zweiten Profils (5) mindestens einen eigenen einen Aktuator (7) hat.

10. Kultivator nach Anspruch 1, **dadurch gekennzeichnet, dass** die Nuten (12, 13) der einzelnen Werkzeuge (10) jeweils ein elastisches Element aufweisen, das unabhängig von Toleranzen einen für alle Werkzeuge ungefähr gleichen Anpressdruck der Profile sicherstellt.

## Claims

1. Cultivator, the frame of which has at least one longitudinal beam (2) and at least one support tube (1) arranged transversely thereto, to which a number of tools (10) for soil cultivation can be attached in any position, wherein
a. the support tube (1; 101) has, over its entire length or part thereof, on one side, a first profile (4; 104) firmly connected to it with at least partially convergent surfaces, more particularly a V-profile, and on its other side, a second profile (5; 105) with at least partially convergent surfaces, more particularly a V-profile, mounted so that it can pivot about an axis (8; 108) arranged in the longitudinal direction of the support tube (1; 101), wherein the cultivator has at least one actuator (7) that acts on a lever (6; 106) which is pivotable about the axis (8; 108) and is fixedly connected at one end to the second profile (5; 105), and wherein
b. the tools (10) of the cultivator have a head part (11; 111) which, on both sides, has grooves (12, 13; 112, 113) with at least partially convergent surfaces more particularly V-shaped grooves, specifically a first groove (12, 112) and a second groove (13, 113), into which the profiles (4, 5; 104, 105) engage, and wherein the second groove (13; 113) interacting with the second movable profile (5; 105) has an elastic element (18; 25; 26) via which a clamping force acts.

2. Cultivator according to claim 1, **characterized in that** the profiles (4, 5) face outwards with their engagement edge (9) and the grooves (12, 13) of the head part (11) are open inwards towards the support tube (1), wherein the movable second profile (5) is acted upon outwards by the at least one actuator (7) in order to clamp the tool (10) in place.

3. Cultivator according to claim 1, **characterized in that** the profiles (104, 105) point inward with their engagement edges (109) and the grooves (112, 113) of the head part (111) of the cultivator are open outward, wherein the movable second profile (105) for clamping the tool (10) is acted upon inward by the at least one actuator (7).

4. Cultivator according to claim 1, **characterized in that** the elastic element is a rubber block (18).

5. Cultivator according to claim 1, **characterized in that** the elastic element is a metal spring clip or disc spring (25).

6. Cultivator according to claim 1, **characterized in that** the elastic element is a leg spring (26), the first leg of which is firmly connected to the head part (11) and the second leg (27) of which interacts with the outwardly facing movable second profile (5).

7. Cultivator, the frame of which has at least one longitudinal beam (102) and at least one support tube (101) arranged transversely thereto, to which a number of tools (10) for soil cultivation can be attached in any position, wherein
a. the support tube (101) has, over its entire length or part thereof, on one side, a first profile (104) firmly connected to it with at least partially convergent surfaces, more particularly a V-profile, which is arranged below the support tube (101), and on its other side a second profile (105) with at least partially convergent surfaces, more particularly a V-profile, mounted so that it can pivot about an axis (108) arranged in the longitudinal direction of the support tube (101), wherein the cultivator has at least one actuator (107) which acts on a lever (106) which is pivotable about the axis (108) and is firmly connected at one end to the second profile (105), and wherein
b. the tools (10) of the cultivator have a head part (111) which, on both sides, has grooves (112, 113) with at least partially convergent surfaces, more particularly V-shaped grooves, specifically a first groove (112) and a second groove (113) into which the profiles (104, 105) engage, wherein the profiles (104, 105) face inwards with their engagement edges (109), the grooves (112, 113) of the head part (111) are open to the outside, and the movable second profile (105) is subjected to inward pressure by the actuator (7) for clamping the tool (10), wherein of the first groove (112) and second groove (113), only the first groove (112) has an elastic element (118) via which a clamping force acts.

8. Cultivator according to claim 1 or 7, **characterized in that** the cultivator has a number of actuators (7), more particularly two or three actuators (7) for a support tube (1; 101), which actuators (7) can be controlled together.

9. Cultivator according to claim 8, **characterized in that** the support tubes (1) and the profiles (4, 5) are divided and their outer parts (31) can be folded up or down, wherein each part (31) of the movable second profile (5) has at least one actuator (7) of its own.

10. Cultivator according to claim 1, **characterized in that** the grooves (12, 13) of the individual tools (10) each have an elastic element which, regardless of tolerances, ensures approximately the same contact pressure of the profiles for all tools.

## Revendications

1. Cultivateur dont le châssis possède au moins un longeron (2) et au moins un tube portant (1) disposé transversalement par rapport à celui-ci, sur lequel un certain nombre d'outils (10) pour le travail du sol peuvent être disposés dans une position quelconque, dans lequel
a. le tube portant (1 ; 101) présente sur toute sa longueur ou une partie de celle-ci, sur un côté, un premier profilé (4 ; 104) fixé dessus qui a des surfaces au moins partiellement convergentes, en particulier un profilé en **V,** et sur son autre côté un deuxième profilé (5 ; 105) avec des surfaces au moins partiellement convergentes, en particulier un profilé en **V,** placé de façon à pouvoir pivoter autour d'un axe (8 ; 108) disposé dans le sens longitudinal du tube portant (1 ; 101), le cultivateur comportant au moins un vérin (7) qui agit sur un levier (6 ; 106) pouvant pivoter autour de l'axe (8 ; 108) et relié à une extrémité au deuxième profilé (5 ; 105), et dans lequel
b. les outils (10) du cultivateur possèdent une partie de tête (11 ; 111) qui présente des deux côtés des rainures (12,13 ; 112,113) ayant des surfaces au moins partiellement convergentes, en particulier des rainures en **V,** à savoir une première rainure (12, 112) et une deuxième (13, 113), dans lesquelles les profilés (4,5 ; 104,105) se mettent en prise, et dans lequel la deuxième rainure (13 ; 113) coopérant avec le deuxième profilé mobile (5 ; 105) présente un élément élastique (18 ; 25 ; 26) sur lequel s'exerce une force de serrage.

2. Cultivateur selon la revendication 1, **caractérisé en ce que** les profilés (4, 5) sont tournés avec leur bord de prise (9) vers l'extérieur et les rainures (12, 13) de la partie de tête (11) sont ouvertes vers l'intérieur en direction du tube portant (1), le deuxième profilé mobile (5) étant soumis à l'action de l'au moins un vérin (7) vers l'extérieur pour serrer l'outil (10).

3. Cultivateur selon la revendication 1, **caractérisé en ce que** les profilés (104, 105) sont orientés avec leurs bords de prise (109) vers l'intérieur et les rainures (112, 113) de la partie de tête (111) sont ouvertes vers l'extérieur, le deuxième profilé mobile (105) étant soumis à l'action de l'au moins un vérin (7) vers l'intérieur pour serrer l'outil (10).

4. Cultivateur selon la revendication 1, **caractérisé en ce que** l'élément élastique est un bloc de caoutchouc (18).

5. Cultivateur selon la revendication 1, **caractérisé en ce que** l'élément élastique est une agrafe-ressort métallique ou une rondelle-ressort (25).

6. Cultivateur selon la revendication 1, **caractérisé en ce que** l'élément élastique est un ressort à branches (26) dont la première branche est fixée à la partie de tête (11) et dont la deuxième branche (27) coopère avec le deuxième profilé mobile (5) orienté vers l'extérieur.

7. Cultivateur dont le châssis possède au moins un longeron (102) et au moins un tube portant (101) disposé transversalement par rapport à celui-ci, sur lequel un certain nombre d'outils (10) pour le travail du sol peut être disposé dans une position quelconque, dans lequel
a. le tube portant (101) présente sur toute sa longueur ou une partie de celle-ci, sur un côté, un premier profilé (104) fixé dessus qui a des surfaces au moins partiellement convergentes, en particulier un profilé en V, qui est disposé sous le tube portant (101), et sur son autre côté un deuxième profilé (105) avec des surfaces au moins partiellement convergentes, en particulier un profilé en V, placé de façon à pouvoir pivoter autour d'un axe (108) disposé dans le sens longitudinal du tube portant (101), le tube portant comportant au moins un vérin (107) qui agit sur un levier (106) pouvant pivoter autour de l'axe (108) et relié à une extrémité au deuxième profilé (105), et dans lequel
b. les outils (10) du cultivateur possèdent une partie de tête (111) qui présente des deux côtés des rainures (112,113) ayant des surfaces au moins partiellement convergentes, en particulier des rainures en V, à savoir une première rainure (112) et une deuxième (113), dans lesquelles les profilés (104,105) se mettent en prise, les profilés (104, 105) étant orientés avec leurs bords de prise (109) vers l'intérieur, les rainures (112, 113) de la partie de tête (111) étant ouvertes vers l'extérieur et le deuxième profilé mobile (105) étant soumis à l'action de l'au moins un vérin (7) vers l'intérieur pour serrer l'outil (10), seule la première rainure (112) parmi la première rainure (112) et la deuxième rainure (113) comportant un élément élastique (118) par l'intermédiaire duquel une force de serrage est exercée.

8. Cultivateur selon la revendication 1 ou 7, **caractérisé en ce qu'**il comporte un certain nombre de vérins (7), en particulier deux ou trois vérins (7) pour un tube portant (1 ; 101), lesquels vérins (7) peuvent être actionnés ensemble.

9. Cultivateur selon la revendication 8, **caractérisé en ce que** les tubes portants (1) et les profilés (4, 5) sont divisés et leurs parties extérieures (31) peuvent être ouvertes ou rabattues, chaque partie (31) du deuxième profilé mobile (5) possédant au moins un vérin (7) propre.

10. Cultivateur selon la revendication 1, **caractérisé en ce que** les rainures (12, 13) des différents outils (10) comportent chacune un élément élastique qui assure, indépendamment des tolérances, une pression d'appui des profilés à peu près égale pour tous les outils.
